**Europäisches Patentamt**

**European Patent Office**

**Office européen des brevets**

(19)

(11) Veröffentlichungsnummer: **0 044 346**

**A1**

(12) **EUROPÄISCHE PATENTANMELDUNG**

(21) Anmeldenummer: **80103953.8**

(22) Anmeldetag: **10.07.80**

(51) Int. Cl.³: **B 64 G 1/10**

(43) Veröffentlichungstag der Anmeldung:
**27.01.82** Patentblatt **82/4**

(84) Benannte Vertragsstaaten:
**AT BE CH DE FR GB IT LI LU NL SE**

(71) Anmelder: **Messerschmitt-Bölkow-Blohm Gesellschaft mit beschränkter Haftung München Robert-Koch-Strasse D-8012 Ottobrunn(DE)**

(72) Erfinder: **Koelle, Dietrich E., Dr. Ing. Liebigweg 10 D-8012 Ottobrunn(DE)**

(54) **Raumfahrzeug.**

(57) Es handelt sich um ein Raumfahrzeug (1, 32) das mit einem Raumtransporter (30) nach Art des "Space-Shuttle" zunächst in eine erdnahe Umlaufbahn verbracht wird und von da in eine geostationäre oder sonstige Bahn aufsteigt.

Zur optimalen Nutzung des Platzangebotes im Raumtransporter (30) und der anderen Aufstiegsbedingungen ist das gesamte Raumfahrzeug (1, 32) modular nach Art einer flachen, kastenförmigen Plattform in Gittertragwerkbauweise ausgeführt. Sowohl die Nutzlast (15, 16, 17, 18) und alle Subsysteme, als auch das Antriebssystem (11) für die Verbringung des Raumfahrzeuges (1, 32) in seine endgültige Umlaufbahn und für die Bahn- und Lageregelung im geostationären Umlauf, sind in dem Gittertragwerk (10) als integraler, nicht zu trennender Bestandteil des Raumfahrzeuges untergebracht.

Fig. 1

EP 0 044 346 A1

R a u m f a h r z e u g


Die Erfindung betrifft ein Raumfahrzeug mit in ein
Gittertragwerk integriertem Antriebssystem, das leistungsmäßig in der Lage ist, das Raumfahrzeug von
einer niedrigen Erdumlaufbahn in eine geostationäre
oder sonstige Bahn zu verbringen.


Mit dem Einsatz der als Raumtransporter oder auch
Space Shuttle bekannten Raumfähre sollen Raumfahrzeuge
nicht mehr direkt mit Trägerraketen in Erdumlaufbahnen
oder Erdentweichbahnen verbracht, sondern mit dem wiederverwendbaren Raumtransporter zunächst in eine niedrige Erdumlaufbahn von z.B. 300 km Höhe befördert
werden.


Dort werden die Raumfahrzeuge von dem Raumtransporter
mittels Manipulator-Arm ausgesetzt und gelangen mittels Zusatzstufen oder eigener Antriebssysteme in die
geplante Bahn.


Aus der DE-OS 28 50 920 ist ein Verfahren bekannt, bei
dem ein Satellit mit angekoppeltem Antriebsmodul aus
einer niedrigen Erdumlaufbahn in eine endgültige Erdumlaufbahn oder Erdentweichtrajektorie verbracht
werden soll.

- 2 -

Es handelt sich dabei um einen Satelliten konventioneller Art, d.h. um einen solchen, wie er bisher für den Raketentransport gebaut wurde. Dieser konventionelle, kastenförmige Satellit wird ergänzt durch ein abtrennbares Antriebsmodul, in das Treibstofftanks und ein Antriebssystem für den Satellitentransfer in eine hohe Bahn integriert sind.

Mit dem Einsatz der Raumfähre ist das bisherige Satellitenkonzept in Kastenbauweise überholt, da aufgrund des Platzangebotes in der Raumfähre und des zulässigen Gewichts des auszusetzenden Raumfahrzeuges mit der konventionellen Bauweise eine wirtschaftliche Ausnutzung der erweiterten Möglichkeiten in der Raumfähre nicht möglich ist. Da bei der Raumfähre die Startkosten entsprechend der benutzten Länge des Nutzlastraumes bzw. nach dem Nutzlastanteil berechnet werden, ist eine neue kostenoptimale Konzeption für Satelliten, bzw. Raumfahrzeuge notwendig. Mit dem bekannten Prinzip, an einem konventionellen Satelliten eine Antriebseinheit anzukoppeln, ist eine kostengünstige Ausnutzung des Raumtransporters nicht erzielbar, da der auf die Unterbringung in einer schlanken Rakete hin konzipierte Satellit zu viel Raum beansprucht und von gewichtlich und kostenmäßig aufwendigen Vorrichtungen gestützt werden muß.

Aufgabe der Erfindung ist es, ein Raumfahrzeug zu schaffen, das mit dem Raumtransporter in eine erste

- 3 -

- 3 -

Umlaufbahn verbracht werden kann, und mit dem die Möglichkeiten des Raumtransporters optimal ausgenutzt werden.

Diese Aufgabe ist gemäß dem Hauptanspruch dadurch gelöst, daß das gesamte Raumfahrzeug modular nach Art einer flachen, kastenförmigen Plattform in Gittertragwerkbauweise ausgeführt ist und daß sowohl die Nutzlast und alle Subsysteme als auch das Antriebssystem sowohl für die Verbringung des Raumfahrzeugs in seine endgültige Umlaufbahn und für die Bahn- und Lageregelung im geostationären Umlauf in dem Gittertragweg als integraler Bestandteil des Raumfahrzeugs untergebracht sind.

Im Gegensatz zu den bisherigen konventionellen Satelliten handelt es sich um ein Raumfahrzeug, bei dem die Plattform selbst den Satelliten darstellt. Typische Werte sind eine Masse von mehr als 2000 kg und eine elektrische Leitung von über 3 KW bis zu 20 KW und mehr. Aufgrund des modularen Charakters des Raumfahrzeugs, lassen sich auch größere Einheiten durch einfache Vervielfachung des Prinzips herstellen. Dies ist angesichts der Tatsache, daß geostationäre Satelliten eine immer größere Zahl von Antennen tragen müssen, von großer Bedeutung. Ebenso wird einem anderen Problem Rechnung getragen. Geostationäre Nachrichtensatelliten z.B. für die Versorgung Europas bekommen einen bestimmten Standort im Raum zugewiesen. Nicht möglich ist es, mehrere Einzelsatelliten mit gleicher Frequenz in der Nähe

- 4 -

— 4 —

zu positionieren, dagegen kann eine entsprechend
erweiterte Plattform alle gewünschten Einrichtungen
auch für mehrere Nationen aufnehmen.

Die Erfindung ist anhand der Figuren näher erläutert.
Es zeigen:

Fig. 1   ein Raumfahrzeug der neuen Generation;

Fig. 2   die Aufhängung im Laderaum des Raumtransporters;

Fig. 3   einen Vergleich Stand der Technik mit dem
         neuen Raumfahrzeug.

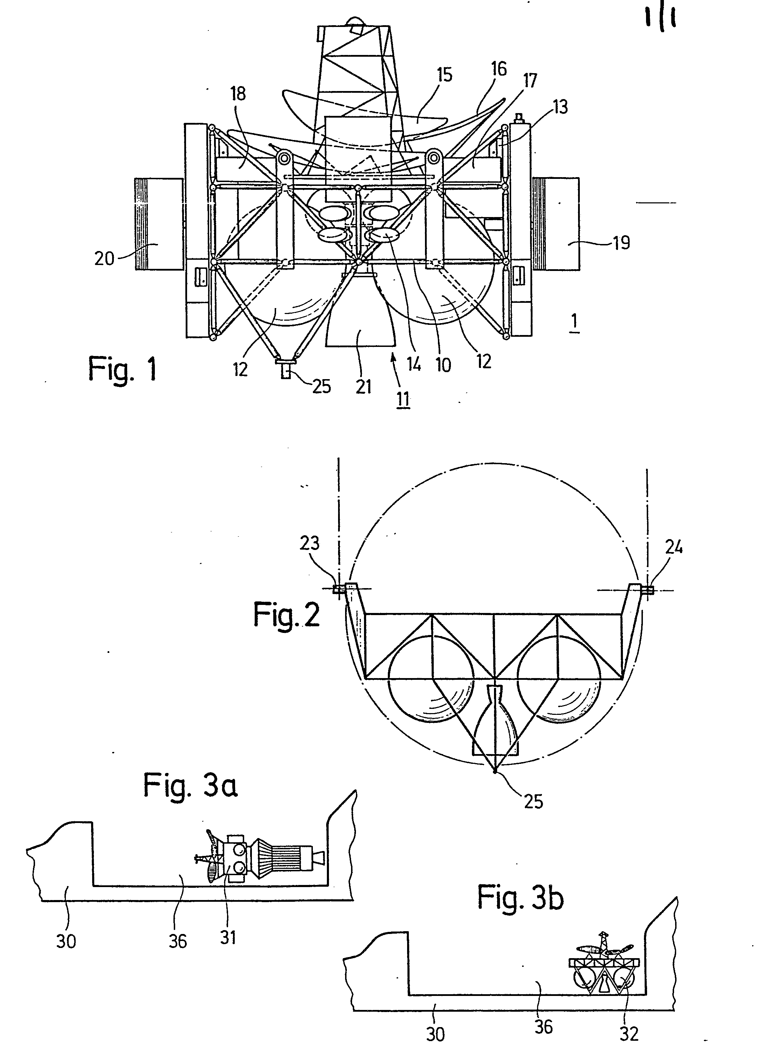

Die Fig. 1 zeigt ein Raumfahrzeug 1 der neuen Generation. Grundstruktur ist ein Gittertragwerk 10, welches
aus Gewichts- und Festigkeitsgründen eine Konstruktion
entsprechend der deutschen Patentanmeldung P 28 55 570.6
sein kann. Mit solchen faserverstärkten stabförmigen
Verbindungselementen lassen sich modulare Strukturen
aufbauen, welche dann beliebig aneinandergereiht werden können.

Das Gittertragwerk 10 — und damit das ganze Raumfahrzeug sind durch ihre flache, flächenartige Struktur
gekennzeichnet. In das Gittertragwerk 10 wird das Antriebssystem 11, bestehend aus Treibstofftanks 12,
einem Haupttriebwerk 21 und Kleintriebwerken 13, 14
für die Lageregelung und Bahnkorrekturen eingebaut.
Die Treibstofftanks können aufgrund des Platzangebotes
in dem Raumtransporter z.B. 1,4 m Durchmesser haben, so

Akte 7844 EP

- 5 -

daß mit zwei Tanks 3600 kg MMH und $N_2O_4$ transportiert werden können. Das Haupttriebwerk 21 entwickelt einen Schub von z.B. 5 KN mit einem spezifischen Impuls von mehr als 310 sec bei einer Masse von 20 kg.

Mit diesem integrierten Antriebssystem werden sowohl der Perigäumsimpuls, der Apogäumsimpuls, Umlaufbahnkorrekturen als auch die Lageregelung im geostationären Umlauf ausgeführt.

Aufgrund des flächenhaften Charakters des Raumfahrzeuges steht eine große, auf die Erde ausrichtbare Oberfläche zur Verfügung, so daß eine Vielzahl von Antennen 15, 16 installiert werden kann. Andere Nutzlasten wie z.B. Boxen 17, 18 oder Erde- und Sonnensensoren und dgl. werden auf oder in dem Gittertragwerk 10 untergebracht. Solargeneratoren 19, 20 erstrecken sich seitlich vom Gittertragwerk 10 und sind an diesem befestigt. Das Gittertragwerk 1o macht es möglich, nach allen Seiten hin Solargeneratoren anzubringen.

Das Raumfahrzeug 1 wird unmittelbar in den Laderaum des Raumtransporters eingehängt. Hierzu dienen gemäß Fig. 2 Fittings 23, 24 sowie eine Kielunterstützung 25. Es sind daher für die Halterung des Raumfahrzeuges keinerlei Zusatzvorrichtungen erforderlich, wie sie z.B. bei der Unterbringung konventioneller Satelliten notwendig sind zur Abstützung der Nutzlasten.

- 6 -

_- 6 -_

In Fig. 3a, 3b sind die räumlichen Verhältnisse anhand des Raumtransporters 30 dargestellt. Es ist deutlich, daß nach dem Stand der Technik (Fig.3a) nahezu die doppelte Länge im Laderaum 36 für den Satelliten 31 benötigt wird, wie bei einem Raumfahrzeug 32 nach der Erfindung. Volumen des Raumfahrzeugs und Tragfähigkeit des Raumtransporters sind optimal aufeinander abgestimmt. Deutlich kostenreduzierend wirkt sich aus, daß anders als beim Stand der Technik keine zusätzliche Antriebseinheit und kein zusätzliches Traggerüst im Laderaum benötigt werden. Schließlich gestattet der modulare Charakter des Raumfahrzeuges eine Vervielfachung der nutzbaren Struktur für die Unterbringung von Nutzlasten, ohne daß jeweils eine Neukonstruktion notwendig wird. Dies gilt auch für den Fall unterschiedlicher Aufgaben und damit Ausrüstung des Raumfahrzeuges.

MESSERSCHMITT-BÖLKOW-BLOHM     Ottobrunn, 27.06.1980
  GESELLSCHAFT                BT01 Fro/gö
MIT BESCHRÄNKTER HAFTUNG     8744 EP
     MÜNCHEN

# R a u m f a h r z e u g

## P a t e n t a n s p r ü c h e

1. Raumfahrzeug mit in ein Gittertragwerk integriertem Antriebssystem, das leistungsmäßig in der Lage ist, das Raumfahrzeug von einer niedrigen Erdumlaufbahn in eine geostationäre oder sonstige Bahn zu verbringen, dadurch g e k e n n z e i c h n e t , daß das gesamte Raumfahrzeug (1,32) modular nach Art einer flachen, kastenförmigen Plattform in Gittertragwerkbauweise ausgeführt ist und daß sowohl die Nutzlast (15, 16, 17, 18) und alle Subsysteme als auch das Antriebssystem (11) für die Verbringung des Raumfahrzeugs (1, 32) in seine endgültige Umlaufbahn und für die Bahn- und Lageregelung im geostationärem Umlauf in dem Gittertragwerk (1o) als integraler, nicht zu trennender Bestandteil des Raumfahrzeugs untergebracht sind.

- 2 -

0044346

Akte 8744 EP

- 2 -

2. Raumfahrzeug nach Anspruch 1, dadurch g e k e n n -
z e i c h n e t , daß die Halterung für das Raumfahrzeug (1, 32) im Laderaum (36) des Raumtransporters (30) aus seitlich angebrachten Fittings (23,
24) und aus einer Kielunterstützung (25) besteht
und daß ohne manuelle oder automatische Montagevorgänge das Raumfahrzeug mit Hilfe des Manipulator-
Arms des Raumtransporters komplett aussetzbar ist.

Fig. 1

Fig.2

Fig. 3a

Fig. 3b

## 0044346

Nummer der Anmeldung

**Europäisches Patentamt**

# EUROPÄISCHER RECHERCHENBERICHT

EP 80 10 3953

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | AVIATION WEEK & SPACE TECHNOLOGY, 8. Mai 1978<br>C.COVAULT: "Germans Develop Multi-mission Satellite",<br>Seiten 51 bis 55<br><br>* Seiten 51 und 53, insbesondere Seite 53, letzter Absatz *<br><br>-- | 1,2 |
| A | ASTRONAUTICS & AERONAUTICS, Juni 1977<br>ROSEN und JONES: "STS-Optimized Satellite Concept",<br>Seiten 48 bis 53<br><br>* ganzes Dokument *<br><br>---------- | 1 |

**KLASSIFIKATION DER ANMELDUNG (Int Cl ·)**

B 64 G 1/10

**RECHERCHIERTE SACHGEBIETE (Int Cl ·)**

B 64 G

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10.3.1981 | PETERS |

EPA form 1503.1  06.78